# EUROPEAN PATENT APPLICATION

(11) **EP 4 518 122 A1**
(43) Date of publication of application: **05.03.2025**
(21) Application number: 23194233.5
(22) Date of filing: 30.08.2023
(51) Int. Cl.: H02M 1/32, H02M 7/483

(54) **METHOD FOR CONTROLLING A CONVERTER CELL AND A CONTROL SYSTEM**

(71) Applicant: Hitachi Energy Ltd, 8050 Zürich (CH)
(72) Inventor: LIU, Bochen, 724 61 Västerås (SE); CHEN, Nan, 722 10 Västerås (SE); NAWAZ, Muhammad, 197 32 Bro (SE); AUGUSTIN, Tim, 723 59 Västerås (SE); HEDERSTROM, Leif, 723 48 Västerås (SE)
(74) Representative: AWA Sweden AB

(57) **Abstract**

There is disclosed herein a method for controlling a converter cell (10) of a modular multi-level converter, MMC (1), said converter cell comprising a fault response circuitry. The method comprises monitoring (S1) at least one current derivative, di/dt, in the converter cell, detecting (S2) a fault in the converter cell, operating the fault response circuitry in response to the fault, and classifying (S3) the fault based on the current derivative. There is also disclosed a control system (2) performing said method.

## Description

### Technical field

The present disclosure generally relates to a method for controlling a converter cell of a modular multi-level converter, and to a control system.

### Background

Power converters have a crucial role in the operation of various electrical systems such as renewable energy system and high voltage direct current, HVDC, power grid systems. To ensure the safety of equipment, enhance system reliability and to protect critical components, fault protection is implemented in the power converters. In a modular multi-level converter, MMC, each converter cell generally has a protection circuit configured to protect the individual converter cell, the MMC and also to protect other components in the power grid system.

An example of a protection system used for converter cell is a combination of crowbar circuits and bypass switches. A crowbar circuit is generally used as a protective mechanism in power converters to clamp the output voltage to a safe level quickly and effectively, in the event of an overvoltage fault. It acts as a "short circuit" path across the output terminals of the converter to divert excess energy and protect the connected equipment. The bypass switch is generally used for redirecting the power flow such that a faulty component in the converter is bypassed.

However, existing protection systems may provide too little uptime of the converter cells, and the reliability of the system may also be too low. Therefore, there is still a need for improved protection systems for converter cells.

### Summary

It is therefore an object of the present disclosure to provide a method for controlling a converter cell of a modular multi-level converter, MMC and a control system for such converter cell that provides higher reliability, higher availability and improved information for handling faults.

According to a first aspect of the present disclosure, a method for controlling a converter cell of an MMC is provided. Said converter cell comprises fault response circuitry. The method comprises monitoring at least one current derivative, di/dt, in the converter cell, detecting a fault in the converter cell, operating the fault response circuitry in response to the fault, and classifying the fault based on the current derivative.

According to a second aspect of the present disclosure, a control system is provided. The control system comprises a converter cell for an MMC and a control unit configured to perform the method according to the first aspect. The converter cell comprises at least one branch of switching elements having a first switching element and a second switching element connected in series, and an energy storage connected in parallel with said at least one branch of switching element. The converter cell further comprises a crowbar circuit connected in parallel to said at least one branch of switching elements, and a first and second terminal connected to the at least one branch of switching elements.

The MMC topology is widely used in a wide range of application such as high voltage direct current, HVDC, systems and STATCOMs. Protection of the converter cells is a vital part in avoiding a fault, such as a short circuit fault, propagating through the system. When a fault happens in a converter cell, the protection system generally bypasses the faulty converter cell and thereby disconnects the converter cell from the MMC. Thereafter, the faulty converter cell can be replaced by the operator during the next maintenance period.

However, there are different types of faults with different severity. A realization by the inventors is that the severity of the faults may be measured through the current derivative and that the less severe types of faults are generally more common than ones that can cause serious propagating problems. Moreover, it is realized as a part of the present disclosure that a fault of a lower severity has generally a lower current derivative than a fault of higher severity. Therefore, faults can be classified based on how large the current derivative is and thereby classified based on the expected severity of the fault. The different types of faults may require different kind of maintenance and in some cases, it is not necessary to replace the converter cell, as it is not damaged.

By measuring the current derivative and thereby classifying the faults into different types of faults based on the measured current derivative, the operator will be provided with improved information about the status of the system. By knowing how severe the fault was, different kind of maintenance may be planned based on this information. Thus, the maintenance period may be reduced and the troubleshooting at site may partly be avoided.

Furthermore, the improved information may also provide the operator with option of only checking the status of the converter cell before reintroducing the converter cell into operation. However, it should be noted that the classification of faults may not only be based on the severity but also on other classifications, such as for example different types of faults that result in different consequences for the system.

The method may further comprise operating the fault response circuitry based on the classification of the fault.

The improved information may also provide the operator with the option to perform different fault responses by the fault response circuitry based on the classification of the fault. As earlier described, generally, the majority of the faults are of lower severity. For faults classified as more severe, the fault response circuitry may be programmed to operate in a certain way, while for a fault classified as less severe, the fault response circuitry may be programmed to operate in another way. This allows the operator to classify the faults and design the fault response circuity to operate in an optimal way for each classification of faults.

The classification of the fault may be determined by whether the current derivative exceeds a predetermined threshold. That is, the fault response circuitry may be programmed to operate in one way if the fault exceeds the predetermined threshold, and in another way if the current derivative is below the predetermined threshold. The predetermined threshold may be set by the operator to a level that it is known to be less severe. The predetermined threshold of current derivative may be between 2-12 kA/µs, and more preferably 4-6 kA/µs.

However, it should be noted that the classification of the fault may also be determined based on a number of intervals of current derivative and classified based on which interval the current derivative rises too. Thereby, the faults may be classified into more than two classes. In the discussion the example of two classifications will be used, but the discussion is equally applicable to a system with a higher number of predetermined thresholds and therefore a higher number of classifications.

Operating the fault response circuitry of the converter cell may comprise turning off the converter cell and activating a crowbar circuit for the converter cell. The activation of the crowbar circuit may be conditioned on the classification of the fault.

Turning off the converter cell and activating a crowbar circuit is an example of how the fault response circuitry may be operated. To protect the system, the converter cell is generally turned off directly when a fault occurs. As described above, a crowbar circuit is a common method to release the energy of the energy storage of the converter cell. However, by conditioning the activation of the crowbar circuit on the classification of the fault, the converter cell and the operator will be provided with a flexibility of how to operate the system and for what type of fault the crowbar circuit is used. Some faults may not require that the energy of the energy storage is released and therefore it may be preferable to not deenergize the energy storage, while for other faults it may be necessary to directly release the energy of the energy storage. As an example, the crowbar circuit may release the energy if the current derivative exceeds a threshold.

Operating the fault response circuitry of the converter cell may further comprise activating a bypass circuit for the converter cell. The activation of the bypass circuit may also be conditioned on the classification of the fault. The control system of the second embodiment may, in such embodiments, comprise a bypass switch connected between the first and second terminal.

For some classifications of faults, it may be necessary to bypass the full converter cell to protect it from the currents due to the faults. However, this may not be necessary for all types of faults and through the information from the classification based on the current derivative an operator may decide that the faulty converter cell is not bypassed. When the converter cell is bypassed the risk that the fault propagates may be reduced.

Operating the fault response circuitry of the converter cell may further comprise restarting operation of the converter cell and, if the fault is detected within a pre-set duration or if the current derivative is close to zero during turn off, modifying the classification of the fault, provided that the current derivative of the fault was below the predetermined threshold.

For some types of faults, a restart of the operation of the converter cell may be enough to mitigate the fault and return the converter cell to normal operation. By trying to restart the operation of the converter cell and, if successfully mitigating the fault, and thereby returning the converter cell to normal operation, the availability of the converter cells may be increased.

Compared to the existing systems where the converter cell is bypassed when a fault occurs, regardless of the severity of the fault, the restart of the converter cell may mitigate the fault and allow the converter cell to keep operating when a fault is of a less severity. As fewer converter cells may be bypassed due to a fault and waiting for the maintenance period, the operator may design the system with fewer redundant cells, thereby reducing the cost of the system while still keeping up with the reliability and availability requirements of the power grid.

When the converter cell is restarted and if a fault is detected within a pre-set duration from the first fault, the classification of the fault may be modified, by for example increasing the classification to a class with higher severity. The fault detected within the pre-set duration may be that the earlier fault has not been mitigated or a new fault that occurred due to the earlier fault. Another method for detecting if the fault is mitigated is through the current derivative. When the converter cell is turned off successfully and the fault is mitigated it will result in the fault current decreasing and therefore a negative current derivative may be measured. However, if the magnitude of the current derivative remains small, close to zero, it is an indication that the fault current is still flowing. In any of these occasions where a fault occurs in a pre-set duration from the restart or when the magnitude of the current derivative is close to zero during turn off, further operations from the fault response circuitry may be required. Therefore, the classification of the fault may be increased one level, allowing further operations from the fault response circuitry to reduce the effects of the fault.

To increase the understanding of how the fault response circuitry may operate with the different features, an example will be provided. It will be appreciated that this is just an example of how the fault response circuitry may be arranged for a specific system. Other combinations of operations may be used as well. When a fault occurs in the converter cell, there will be an increase in the current derivative due to the fault current from the fault. The magnitude of the current derivative is measured, and the fault is classified based on whether the current derivative exceeds a predetermined threshold.

If the current derivative is measured to be below the predetermined threshold, the fault response circuitry tries to restart the faulty converter cell. If this operation is successful and the fault is mitigated through the restart, the converter cell will enter normal operation. Hence, the system may keep operating as normal.

However, if the magnitude of the current derivative is close to zero during turn-off, it may be an indicator that the fault is still present, or if the restart is not successful and the fault is still occurring or reoccurring during a pre-set duration, it may also be and indicator that the fault is still present. Therefore, further means from the fault response circuitry are needed to handle the fault. The fault may be classified as a more severe fault and the converter cell may be shut off and the crowbar circuit activated to release the energy of the energy storage. Then the converter cell may be bypassed by the bypass switch.

Detecting the fault may be performed by calculating a voltage signal based on the current derivative. The current derivative may be transferred to a voltage signal through an integrator circuit. The fault may be detected based on the magnitude of the determined voltage signal.

A current derivative may be measured for each switching element of the converter cell. This results in that the fault may be determined at switching element level.

The control system may further comprise a gate drive element for each switching element. Each gate drive element may be configured to control the respective switching element and to provide measurements of the current derivative to the control unit.

The measured current derivative may be processed by the gate drive element before it is transmitted to the control unit. If the current derivative measurements are digitalized on the respective gate drive element, the stress and processing time at the control unit may be reduced. This may result in faster reaction time from the fault to where the fault response circuitry starts operating. It should be noted that all of the respective measured current derivative may be processed in one gate drive board to which each gate drive element is connected. However, it is also possible to add an additional circuit in the control unit and perform the processing in the control unit instead of in the gate drive elements. The additional circuit in the control unit allows the control of the switching of the switch element and the control of the current derivative to be separated, which may facilitate the operation and reduce the delay of the control unit.

Each gate drive element may comprise a local controller configured to classify the fault and to communicate the classification to the control unit.

This allows the gate drive element to classify the fault in the local controller and thereby a signal is only sent to the control unit when there is an actual fault. Thereby, the signal may be binary and no digitalization of the signal at the gate drive is needed. This reduces delay at the control unit when deciding what fault response that is needed. As earlier described, an additional circuit may be added to control unit to separate the control of the switching of the switch element and the control of the current derivative in this embodiment as well.

Each gate drive element may comprise a local controller configured to classify the fault and to directly operate the crowbar circuit.

By allowing the local controller to directly operate the crowbar circuit, it eliminates the communication delay between the control unit and the crowbar circuit. Thereby, the crowbar circuit may be activated quicker than when the information passes through the control unit.

Said at least one branch of switching elements may comprise a first and a second branch of switching elements, each having a first and second switching element connected in series. The first terminal may be connected between the first and second switching element of the first branch of switching elements and the second terminal may be connected between the first and second switching element of the second switching branch.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that the present disclosure is not limited to the particular component parts of the device described or steps of the methods described as such device and method may vary. It is also to be understood that the terminology used herein is for purpose of describing particular embodiments only, and is not intended to be limiting.

### Brief description of the drawings

The present disclosure will by way of example be described in more detail with reference to the appended drawings, which show example embodiments of the disclosure.
- Fig. 1: illustrates a circuit diagram of a modular multilevel converter.
- Fig. 2: illustrates a control system having a half bridge converter cell.
- Fig. 3: illustrates a control system having a full bridge converter cell.
- Fig. 4: illustrates an overview of a control scheme.
- Fig. 5: illustrates a method for controlling a converter cell.
- Fig. 6: illustrates a flow scheme for controlling the converter cell.

### Detailed description

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided for thoroughness and completeness, and fully convey the scope of the disclosure to the skilled person.

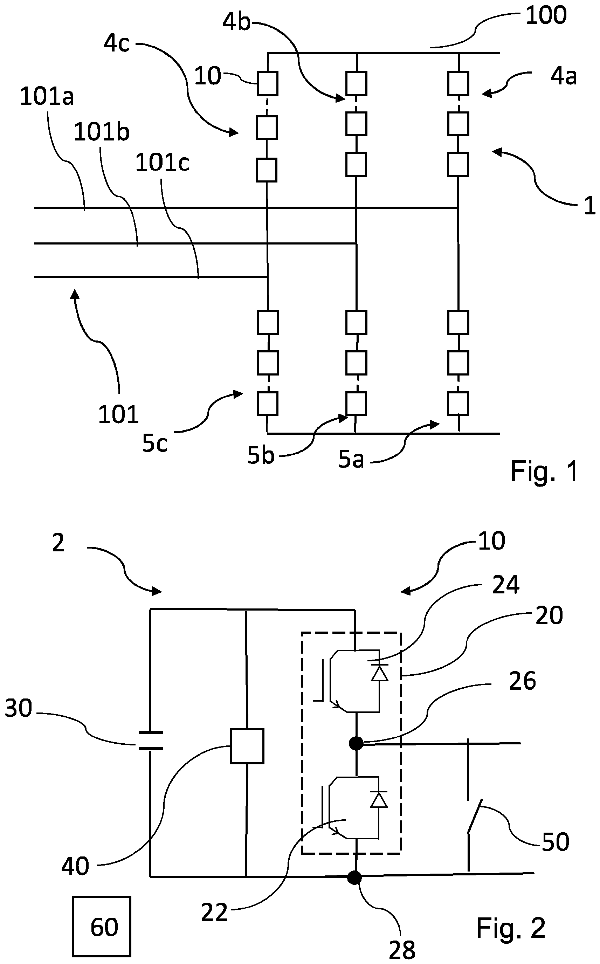

Fig. 1 illustrates a modular multilevel converter, MMC, 1 connecting three phases 101a-101c of an alternating current, AC, system 101, to a high voltage direct current, HVDC, system 100. Each of the phases 101a-101c is connected to an upper arm 4a-4c and a lower arm 5a-5c of the MMC 1. Each upper arm 4a-4c and lower arm 5a-5c comprises a plurality of converter cells 10 performing switching operations to convert the voltage between AC and DC. All or some of the converter cells 10 may be converter cells according to any of the embodiments of the converter cell 10 that will be described below.

Fig. 2 illustrates a control system 2 for controlling a converter cell 10 of an MMC 1. The converter cell 10 comprises one branch of switching elements 20 having a first switching element 22 and a second switching element 24 connected in series. The first and second switching elements 22, 24 have different possible switching states which can be used to actively manipulate the voltage and current characteristics of the electrical signal. By adjusting the timing and duration of the switching events, the converter cell 10 can convert the voltage between AC and DC and provide a desired output.

The converter cell further comprises an energy storage 30 connected in parallel with said one branch of switching elements 20. In Fig. 2 the energy storage 30 is a capacitor. The energy storage 30 is used for storage of energy during operation of the MMC 1. The converter cell 10 further comprises a crowbar circuit 40 connected in parallel to said at least one branch of switching elements 20. To protect the system in which the converter cell 10 operates in, the converter cell 10 is generally turned off directly when a fault occurs. A crowbar circuit 40 is a common method to release the energy of the energy storage 30 of the converter cell 10 when the converter cell 10 has been turned off. The crowbar circuit 40 allows the energy storage 30 to discharge at least most of the converter cell 10 energy into a crowbar element such as a thyristor in order to limit energy discharged into the switching elements 22, 24.

In Fig. 2 a first terminal 26 and a second terminal 28 configured to connect the converter cell 10 to an external circuit are provided. The first terminal 26 is connected between the first and second switching elements 22, 24 and the second terminal 28 is connected between the first switching element 22 and the energy storage 30. By connecting the first terminal 26 and the second terminal 28 in such a way, the external circuit is connected in parallel with the first switching element 22. This is a common connection of the terminals when a half bridge topology is used for the converter cell 10. There is provided a bypass switch 50 between the first terminal 26 and the second terminal 28. In other words, the bypass switch 50 is connected in parallel with the first switching element 22. When the bypass switch 50 is closed and activated, the bypass switch 50 is configured to bypass the full converter cell 10.

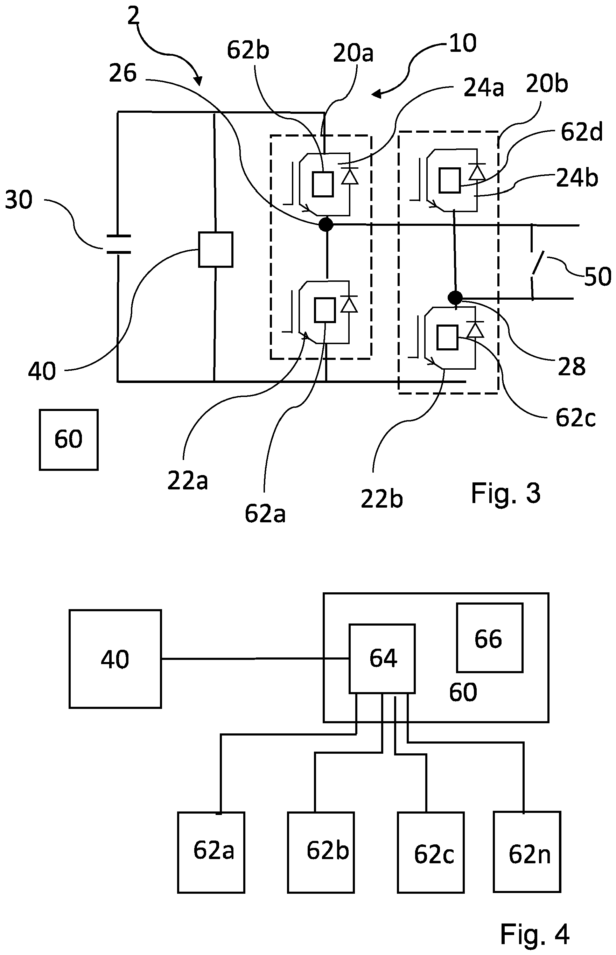

The control system 2 further comprises a control unit 60. The control unit 60 is configured to perform a method 100 for controlling the converter cell 10 and may also be configured to control the switching operation of the switch elements 22, 24. The method 100 will be described in connection to Figs. 4-6. However, first another embodiment of the control system 2 will be described.

In Fig. 3 a similar control system 2, as in Fig. 2, is provided. The control system 2 in Fig. 3 differs from the control system 2 in Fig. 2 primarily in that the converter cell 10 comprises two branches of switching elements 20a, 20b. A first branch of switching elements 20a is connected in parallel with a second branch of switching elements 20b and each of the first branch and the second branch includes a first switching element 22a, 22b and a second switching element 24a, 24b connected in series. Each of the first branch of switching elements 20a and the second branch of switching elements 20b is connected in parallel to the energy storage 30. The first terminal 26 is connected between the first and second switching elements 22a, 24a of the first branch of switching elements 20a and the second terminal 28 is connected between the first and second switching elements 22b, 24b of the second branch of switching elements 20b. Thereby, a full bridge converter cell 10 is provided.

The control unit 60 is configured to be provided with measurements of a current derivative of the switching elements 22, 24 from gate drives. There may be a single gate drive that provides the measurements to the control unit or, as in Fig. 3 and 4, the control system 2 may further comprise a gate drive element 62a-n for each switching element 22, 24.These gate drive elements 62a-n are also configured to perform the switching of the switching elements 22, 24. In Fig. 4, the control unit 60 has a cell controller 66 for controlling the switching performed by the gate drive elements 62a-n and an additional circuitry 64 for processing the measured current derivative provided by the gate drive elements 62a-n. However, it should be noted that there are different methods for processing the measure current derivative. It may be performed directly in the gate drives or by a local controller in the respective gate drive that is allowed to operate the crowbar circuit 40 and the bypass switch 50.

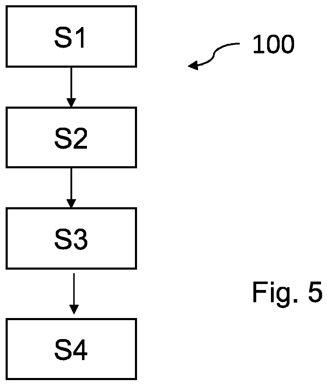

Turning to Fig. 5, a method 100 of controlling the converter cell 10 during a fault is illustrated. When a fault, such as a short circuit fault, occurs in the converter cell 10, there is a risk that the fault current propagates in the power system. Therefore, methods for mitigating the risk of a propagating fault current are vital. However, there are different types of faults with different severity. A realization by the inventors is that the severity of the faults may be measured through the current derivative and that the less severe types of faults is generally more common than the once that may cause serious propagating problems. Some of the less severe faults may even be possible to mitigate through a correct operation by the control unit 60. The method 100 for controlling the converter cell 10 comprises monitoring S1 at least one current derivative, di/dt, in the converter cell 10. The monitoring S1 may be performed by the gate drive elements 62a-n as described above in connection to Fig. 4.

The method further comprises detecting S2 a fault in the converter cell 10. The control unit 60 may detect the fault through the measured current derivative by calculating a voltage signal that is based on the current derivative. The current derivative may for example be passed through an integrator circuit to be transferred to the voltage signal. Thereafter, a fault may be detected based on the magnitude of the determined voltage signal. When a fault is detected, the method further comprises classifying S4 the fault based on the current derivative. The classification of the fault may be determined by if the current derivative exceeds a predetermined threshold. A fault of a lower severity has generally a lower current derivative than a fault of higher severity. Thereby, the fault may be classified based on how large the current derivative is and therefore classified based on the expected severity of the fault. This provides the operator with the option to perform different fault responses by the fault response circuitry based on the classification of the fault. As earlier described, generally, the majority of faults are of lower severity. For faults classified as more severe, the fault response circuitry may be programmed to operate in a certain way, while for a fault classified as less severe, the fault response circuitry may be programmed to operate in another way. This allows the operator to classify the faults and design the fault response circuity to operate in an optimal way for each classification of fault.

Thereafter, the control unit operates S3 a fault response circuitry in response to the fault. The fault response circuitry may be built by different components that are used to mitigate or stop the fault current from propagating. In Fig. 2 and 3 the fault response circuitry comprises the crowbar circuit 40 and the bypass switch 50. However, the fault response circuity may comprise other fault protection components as well, if another response from the fault response circuity is required.

A common response that the control unit 60 may perform is turning off the converter cell 10 and activating the crowbar circuit 40 for the converter cell 10. This allows the stored energy in the energy storage 30 to be released and thereby the current will be reduced in the converter cell 10. However, by operating the crowbar circuit 40 based on the classification of the fault, flexibility is introduced to the control system 2. Some faults may not require that the energy of the energy storage 30 is released and therefore it may be preferable to not deenergize the energy storage 30 while, for other faults, it may be necessary to directly release the energy of the energy storage 30. As an example, the crowbar circuit 40 may release the energy if the current derivative exceeds a threshold.

A further response that the control unit 60 may perform is activating the bypass circuit and closing the bypass switch 50. For some classifications of faults, it may be necessary to bypass the full converter cell 10 to protect it from the currents due to the faults. However, this may not be necessary for all types of faults and through the information from the classification based on the current derivative an operator may decide another operation than bypassing the converter cell 10.

A response that may be suitable for less severe faults is to perform a restart operation of the converter cell 10. For some types of faults, a restart of the operation of the converter cell 10 may be enough to mitigate the fault and return the converter cell 10 back to normal operation. In prior art systems the converter cell is bypassed when a fault occurs, regardless of the severity of the fault. The restart of the converter cell 10 may mitigate the fault and allow the converter cell to keep operating when a fault is of less severity. However, if the fault is detected within a pre-set duration or if the current derivative is close to zero during turn off, the control unit may modify the classification of the fault to perform other operations to protect the converter cell 10. It may be detected if the fault is mitigated or not by studying the current derivative during turn off. When the converter cell 10 is turned off successfully and the fault is mitigated it will result in that the fault current decreases and therefore a negative current derivative may be measured. However, if the magnitude of the current derivative remains small, close to zero, it is an indication that the fault current is still flowing. In other cases, the fault may be mitigated by the restart, but the fault may reappear due to, for example, some faulty component. In that case if the fault is detected within a pre-set duration the classification of the fault may be modified.

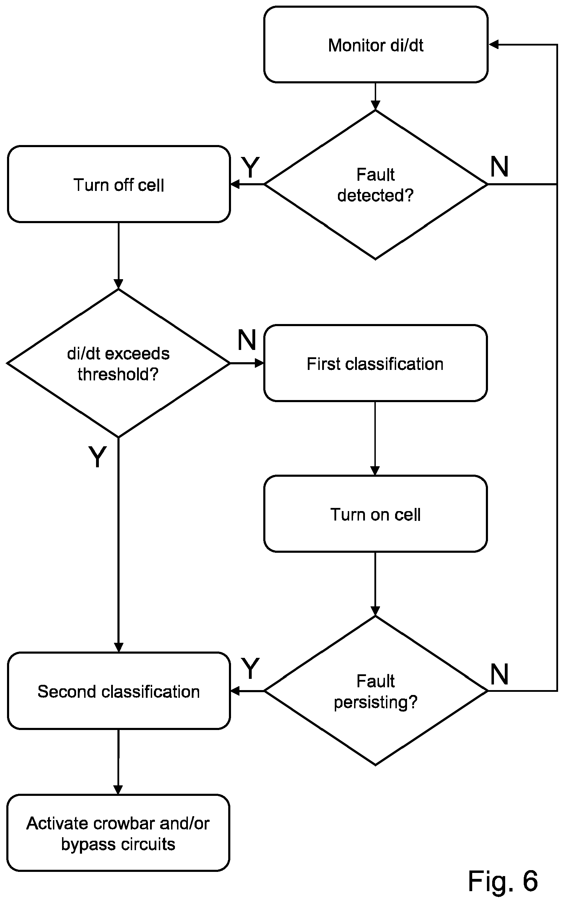

The flow scheme in Fig. 6 is an example of how the control unit 60 shown in Fig. 2 may be programmed and how the fault response circuitry may function (references from Fig. 2 used here).

The current derivative is monitored/measured and when a fault occurs in the converter cell 10 there will be an increase in the current derivative due to the current from the fault. If a fault is detected the control unit 60 will turn off the converter cell 10 as a first protection of the converter cell 10. The magnitude of the current derivative is measured, and the fault is classified based on if the current derivative exceeds a predetermined threshold.

If the current derivative is measured to be below the predetermined threshold, the fault response circuitry tries to turn the faulty converter cell 10 on again. If this operation is successful and the fault is mitigated through the restart, the converter cell 10 will enter normal operation. Thereafter, the system may keep operating as normal.

However, if the magnitude of the current derivative is close to zero during turn off it may be an indicator that the fault is still present or if the restart is not successful and the fault is still occurring or reoccurring during a pre-set duration, further means from the fault response circuitry are needed to handle the fault. Therefore, the fault may be classified as a more severe fault, a fault that exceeds the predetermined threshold, and the converter cell 10 may be shut off and the crowbar circuit 40 activated to release the energy of the energy storage 30. Then the converter cell may be bypassed by the bypass switch 50.

This operation provides a possibility for the converter cell 10 to return to normal operation instead of directly being bypassed and replaced at the next maintenance window. This results in that the availability among the converter cells is increased and in that fewer redundant converter cells is necessary.

The person skilled in the art realizes that the present disclosure by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims.

## Claims

1. Method (100) for controlling a converter cell (10) of a modular multi-level converter, MMC (1), said converter cell comprising fault response circuitry;
the method comprising,
monitoring (S1) at least one current derivative, di/dt, in the converter cell,
detecting (S2) a fault in the converter cell,
operating (S3) the fault response circuitry in response to the fault, and
classifying (S4) the fault based on the current derivative.

2. The method according to claim 1 further comprising,
operating (S4) the fault response circuitry based on the classification of the fault.

3. The method according to claim 2, wherein operating the fault response circuitry of the converter cell comprises:
turning off the converter cell;
activating a crowbar circuit for the converter cell;
wherein the activation of the crowbar circuit is conditioned on the classification of the fault.

4. The method according to claim 3, wherein operating the fault response circuitry of the converter cell further comprises:
activating a bypass circuit for the converter cell;
wherein the activation of the bypass circuit is conditioned on the classification of the fault.

5. The method according to any one of the preceding claims, wherein the classification of the fault is determined by if the current derivative exceeds a predetermined threshold.

6. The method according to any one of the preceding claims, wherein the predetermined threshold of current derivative is between 2-12 kA/µs and more preferably 4-6 kA/µs.

7. The method according to claim 5 or 6 wherein operating the fault response circuitry of the converter cell further comprises:
restarting operation of the converter cell and, if the fault is detected within a pre-set duration or if the current derivative is close to zero during turn off, modifying the classification of the fault, provided that the current derivative of the fault was below the predetermined threshold.

8. The method according to any one of the preceding claims, wherein detecting the fault is performed by calculating a voltage signal based on the current derivative.

9. The method according to claim 8, wherein the fault is detected based on the magnitude of the determined voltage signal.

10. The method according to any one of the preceding claims, wherein a current derivative is measured for each switching element of the converter cell.

11. A control system (2) comprising;
a converter cell (10) for a modular multi-level converter, MMC, and
a control unit (60) configured to perform the method according to claim 1-10,
wherein the converter cell comprising;
at least one branch of switching elements (20) having a first switching element (22) and a second switching element (24) connected in series,
an energy storage (30) connected in parallel with said at least one branch of switching element,
a crowbar circuit (40) connected in parallel to said at least one branch of switching elements, and
a first and second terminal (26, 28) connected to the at least one branch of switching elements.

12. The control system according to claim 11, wherein the converter cell further comprises a bypass switch (50) connected between the first and second terminal.

13. The control system according to claim 11 or 12 further comprising a gate drive element (62a-d) for each switching element, wherein each gate drive element is configured to control the respective switching element and to provide measurements of the current derivative to the control unit.

14. The control system according to claim 13, wherein each gate drive element comprises a local controller configured to classify the fault and to communicate the classification to the control unit.

15. The control system according to claim 13, wherein each gate drive element comprises a local controller configured to classify the fault and to directly operate the crowbar circuit.

16. The control system according to any one of claims 11 to 15, wherein said at least one branch of switching elements comprises a first and a second branch of switching elements (20a, 20b), each having a first (22a, 22b) and second (24a, 24b) switching element connected in series, wherein the first terminal is connected between the first and second switching element of the first branch of switching elements and the second terminal is connected between the first and second switching element of the second switching branch.
